# EUROPEAN PATENT SPECIFICATION

(11) **EP 4 162 727 B1**
(45) Date of publication and mention of the grant of the patent: **18.06.2025**
(21) Application number: 21734992.7
(22) Date of filing: 21.05.2021
(51) Int. Cl.: H04W 36/00, H04W 36/08, H04W 88/02

(54) **NEIGHBOR CELL DETECTION USING PHYSICAL CELL IDENTIFIER (PCI) AND CELL TIMING INFORMATION**
NACHBARZELLENDETEKTION UNTER VERWENDUNG VON PHYSISCHEM ZELLENIDENTIFIKATOR (PCI) UND ZELLENTIMINGINFORMATIONEN
DÉTECTION DE CELLULE VOISINE À L'AIDE D'UN IDENTIFIANT DE CELLULE PHYSIQUE (PCI) ET D'INFORMATIONS DE SYNCHRONISATION DE CELLULE

(30) Priority: 04.06.2020 IN 202041023457
(43) Date of publication of application: 12.04.2023
(73) Proprietor: QUALCOMM INCORPORATED, San Diego, California 92121-1714 (US)
(72) Inventor: KUMAR, Ravinder, San Diego, California 92121-1714 (US); ZAKI, Ahmed, San Diego, California 92121-1714 (US); TIRUCHERAI MURALIDHARAN, Vijayvaradharaj, San Diego, California 92121-1714 (US); MENON, Murali, San Diego, California 92121-1714 (US); PHUYAL, Umesh, San Diego, California 92121-1714 (US); RICO ALVARINO, Alberto, San Diego, California 92121-1714 (US)
(74) Representative: Bardehle Pagenberg Partnerschaft mbB Patentanwälte Rechtsanwälte
(86) International application number: PCT/US2021/033728
(87) International publication number: WO 2021/247259

(56) References cited:
- WO-A1-2016/154604
- WO-A1-2017/070461
- NOKIA SIEMENS NETWORKS ET AL: "On signalling support for FeICIC", 3GPP DRAFT; R1-120715, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050563099
- "3rd Generation Partnership Project;Technical Specification Group Radio Access Network; Evolved Universal Terrestrial Radio Access (E-UTRA) and Evolved Universal Terrestrial Radio Access Network (E-UTRAN);Overall description; Stage 2(Release 8)", 3GPP DRAFT; R3-072429, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20071120, 20 November 2007 (2007-11-20), XP050163198

## Description

### TECHNICAL FIELD

Aspects of the present disclosure relate to wireless communications, and more particularly, to techniques for detecting neighbor cells using physical cell identifier (PCI) and timing information.

### BACKGROUND

Wireless communication systems, as for example described in 3GPP R1-120715, are widely deployed to provide various telecommunication services such as telephony, video, data, messaging, broadcasts, etc. These wireless communication systems may employ multiple-access technologies capable of supporting communication with multiple users by sharing available system resources (for example, bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

These multiple access technologies have been adopted in various telecommunication standards to provide a common protocol that enables different wireless devices to communicate on a municipal, national, regional, and even global level. New radio (for example, 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, further improvements, e.g., improvements in latency, reliability, and the like, in NR and LTE technology remain useful. Preferably, these improvements should be applicable to other multi-access technologies and the telecommunication standards that employ these technologies.

A control resource set (CORESET) for systems, such as an NR and LTE systems, may comprise one or more control resource (e.g., time and frequency resources) sets, configured for conveying PDCCH, within the system bandwidth. Within each CORESET, one or more search spaces (e.g., common search space (CSS), UE-specific search space (USS), etc.) may be defined for a given UE.

### SUMMARY

The invention is defined by the claims.

One innovative aspect of the subject matter described in this disclosure can be implemented in a method for wireless communication by a user equipment (UE). The method generally includes receiving, from a network entity, cell information for neighbor cells; searching for synchronization symbols from the neighbor cells based on the cell information; based on the synchronization symbols from the neighbor cells, identifying one of the neighbor cells to perform a handover to; and initiating a handover from a serving cell to the identified one of the neighbor cells.

Aspects of the present disclosure provide means for, apparatus, processors, and computer-readable mediums for performing the methods described herein.

To the accomplishment of the foregoing and related ends, the one or more aspects comprise the features hereinafter fully described and particularly pointed out in the claims. The following description and the appended drawings set forth in detail some illustrative features of the one or more aspects. These features are indicative, however, of but a few of the various ways in which the principles of various aspects may be employed.

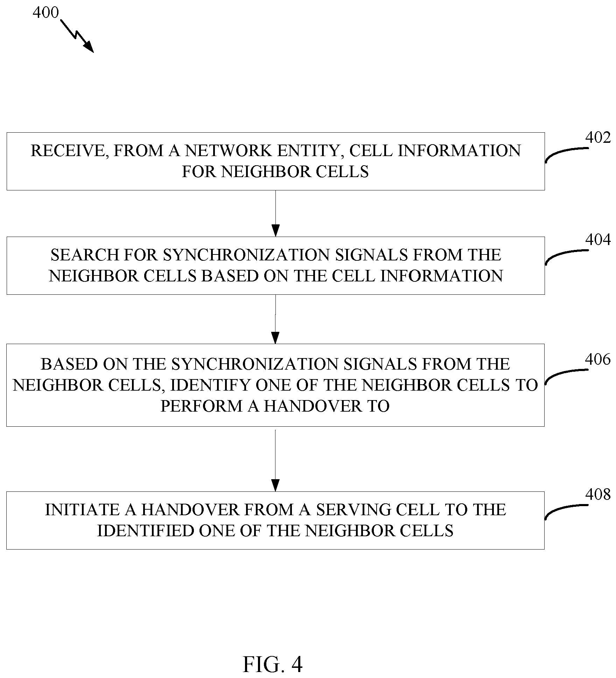

In the following description, the invention is described with particular reference to figure 4, while the description of the remaining figures is provided for illustrative purposes for a better understanding of the invention.

### BRIEF DESCRIPTION OF THE DRAWINGS

Details of one or more implementations of the subject matter described in this disclosure are set forth in the accompanying drawings and the description below. However, the accompanying drawings illustrate only some typical aspects of this disclosure and are therefore not to be considered limiting of its scope. Other features, aspects, and advantages will become apparent from the description, the drawings and the claims.
**FIG. 1** shows an example wireless communication network in which some aspects of the present disclosure may be performed.
**FIG. 2** shows a block diagram illustrating an example base station (BS) and an example user equipment (UE) in accordance with some aspects of the present disclosure.
**FIG. 3** illustrates an example of a frame format for a telecommunication system, in accordance with certain aspects of the present disclosure.
**FIG. 4** illustrates example operations for wireless communication by a user equipment (UE), in accordance with certain aspects of the present disclosure.
**FIG. 5** shows an example of messages exchanged between a user equipment (UE) and network entities to detect and measure neighbor cells and initiate a handover from one network entity to another network entity, in accordance with certain aspects of the present disclosure.
**FIGs. 6A** and **6B** illustrate example results of a probability of detecting neighboring cells using known cell identifiers and timing information, in accordance with certain aspects of the present disclosure.
**FIG. 7** illustrates a communications device that may include various components configured to perform the operations illustrated in **FIG. 4****,** in accordance with certain aspects of the present disclosure

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable mediums for detecting neighbor cells using cell identifier and cell timing information.

The following description provides examples of detecting neighbor cells using cell identifier and cell timing information, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs. In some cases, a 5G NR RAT network may be deployed.

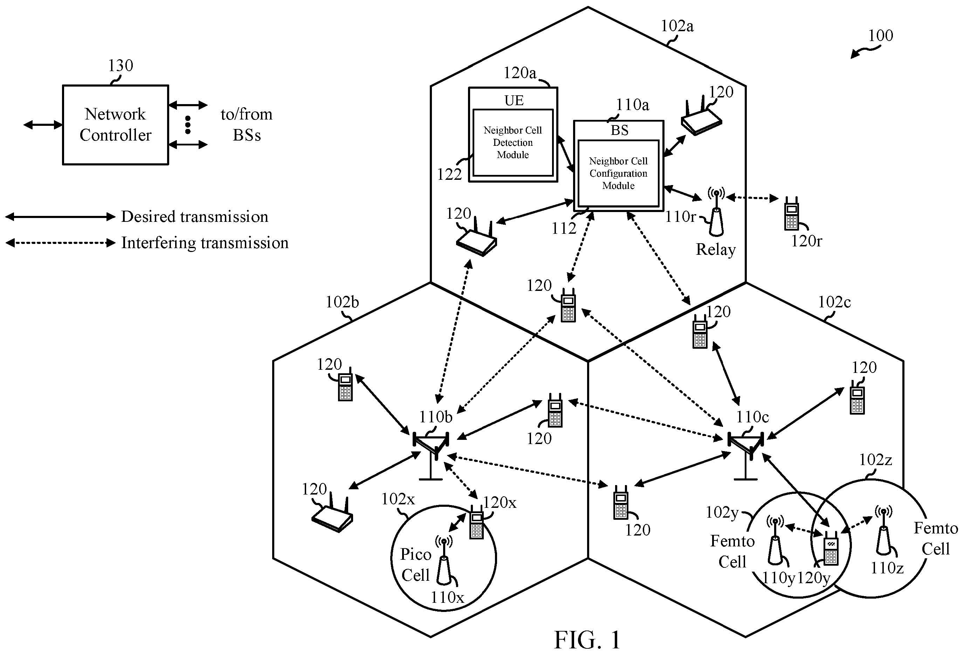

**FIG. 1** illustrates an example wireless communication network 100 in which aspects of the present disclosure may be performed. For example, as shown in **FIG. 1****,** UE 120a may include a neighbor cell detection module 122 that may be configured to perform (or cause UE 120a to perform) operations 400 of **FIG. 4****.** Similarly, a base station 110a may include a neighbor cell configuration module 112 that may be configured to communicate cell identifier and cell timing information that UE 120a can use to identify and hand over to a neighboring cell, as discussed in further detail below.

NR access (for example, 5G NR) may support various wireless communication services, such as enhanced mobile broadband (eMBB) targeting wide bandwidth (for example, 80 MHz or beyond), millimeter wave (mmWave) targeting high carrier frequency (for example, 25 GHz or beyond), massive machine type communications MTC (mMTC) targeting non-backward compatible MTC techniques, or mission critical services targeting ultra-reliable low-latency communications (URLLC). These services may include latency and reliability requirements. These services may also have different transmission time intervals (TTI) to meet respective quality of service (QoS) requirements. In addition, these services may co-exist in the same time-domain resource (for example, a slot or subframe) or frequency-domain resource (for example, component carrier).

As illustrated in **FIG. 1****,** the wireless communication network 100 may include a number of base stations (BSs) 110a-z (each also individually referred to herein as BS 110 or collectively as BSs 110) and other network entities. A BS 110 may provide communication coverage for a particular geographic area, sometimes referred to as a "cell", which may be stationary or may move according to the location of a mobile BS 110. In some examples, the BSs 110 may be interconnected to one another or to one or more other BSs or network nodes (not shown) in wireless communication network 100 through various types of backhaul interfaces (for example, a direct physical connection, a wireless connection, a virtual network, or the like) using any suitable transport network. In the example shown in **FIG. 1****,** the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple cells. The BSs 110 communicate with user equipment (UEs) 120a-y (each also individually referred to herein as UE 120 or collectively as UEs 120) in the wireless communication network 100. The UEs 120 (for example, 120x, 120y, etc.) may be dispersed throughout the wireless communication network 100, and each UE 120 may be stationary or mobile.

Wireless communication network 100 may also include relay stations (for example, relay station 110r), also referred to as relays or the like, that receive a transmission of data or other information from an upstream station (for example, a BS 110a or a UE 120r) and sends a transmission of the data or other information to a downstream station (for example, a UE 120 or a BS 110), or that relays transmissions between UEs 120, to facilitate communication between devices.

A network controller 130 may couple to a set of BSs 110 and provide coordination and control for these BSs 110. The network controller 130 may communicate with the BSs 110 via a backhaul. The BSs 110 may also communicate with one another (for example, directly or indirectly) via wireless or wireline backhaul.

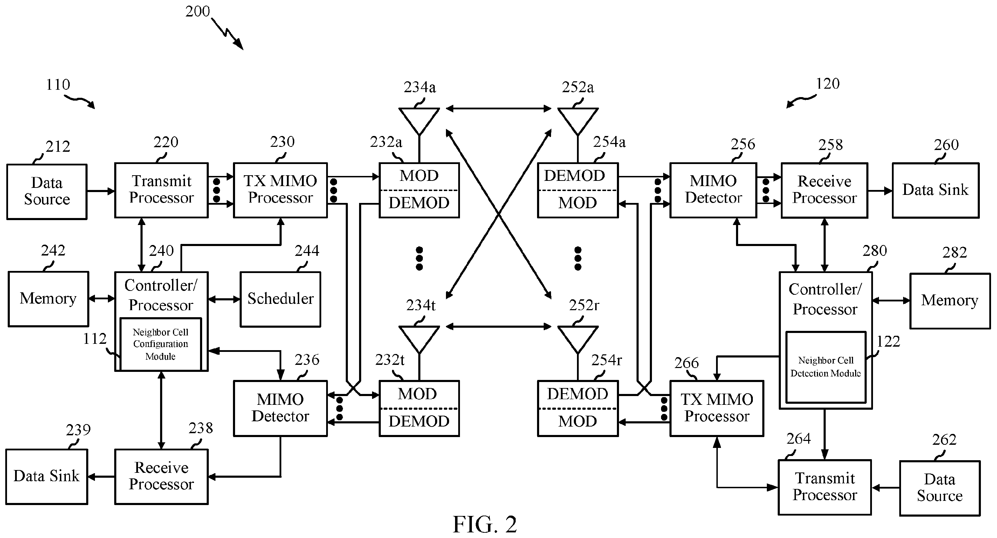

**FIG. 2** shows a block diagram illustrating an example base station (BS) and an example user equipment (UE) in accordance with some aspects of the present disclosure.

At the BS 110, a transmit processor 220 may receive data from a data source 212 and control information from a controller/processor 240. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), etc. The processor 220 may process (for example, encode and symbol map) the data and control information to obtain data symbols and control symbols, respectively. The transmit processor 220 may also generate reference symbols, such as for the primary synchronization signal (PSS), secondary synchronization signal (SSS), and cell-specific reference signal (CRS). A transmit (TX) multiple-input multiple-output (MIMO) processor 230 may perform spatial processing (for example, precoding) on the data symbols, the control symbols, or the reference symbols, if applicable, and may provide output symbol streams to the modulators (MODs) 232a-232t. Each modulator 232 may process a respective output symbol stream (for example, for OFDM, etc.) to obtain an output sample stream. Each modulator may further process (for example, convert to analog, amplify, filter, and upconvert) the output sample stream to obtain a downlink signal. Downlink signals from modulators 232a-232t may be transmitted via the antennas 234a-234t, respectively.

At the UE 120, the antennas 252a-252r may receive the downlink signals from the BS 110 and may provide received signals to the demodulators (DEMODs) in transceivers 254a-254r, respectively. Each demodulator 254 may condition (for example, filter, amplify, downconvert, and digitize) a respective received signal to obtain input samples. Each demodulator may further process the input samples (for example, for OFDM, etc.) to obtain received symbols. A MIMO detector 256 may obtain received symbols from all the demodulators 254a-254r, perform MIMO detection on the received symbols if applicable, and provide detected symbols. A receive processor 258 may process (for example, demodulate, deinterleave, and decode) the detected symbols, provide decoded data for the UE 120 to a data sink 260, and provide decoded control information to a controller/processor 280.

On the uplink, at UE 120, a transmit processor 264 may receive and process data (for example, for the physical uplink shared channel (PUSCH)) from a data source 262 and control information (for example, for the physical uplink control channel (PUCCH) from the controller/processor 280. The transmit processor 264 may also generate reference symbols for a reference signal (for example, for the sounding reference signal (SRS)). The symbols from the transmit processor 264 may be precoded by a TX MIMO processor 266 if applicable, further processed by the demodulators in transceivers 254a-254r (for example, for SC-FDM, etc.), and transmitted to the BS 110. At the BS 110, the uplink signals from the UE 120 may be received by the antennas 234, processed by the modulators 232, detected by a MIMO detector 236 if applicable, and further processed by a receive processor 238 to obtain decoded data and control information sent by the UE 120. The receive processor 238 may provide the decoded data to a data sink 239 and the decoded control information to the controller/processor 240.

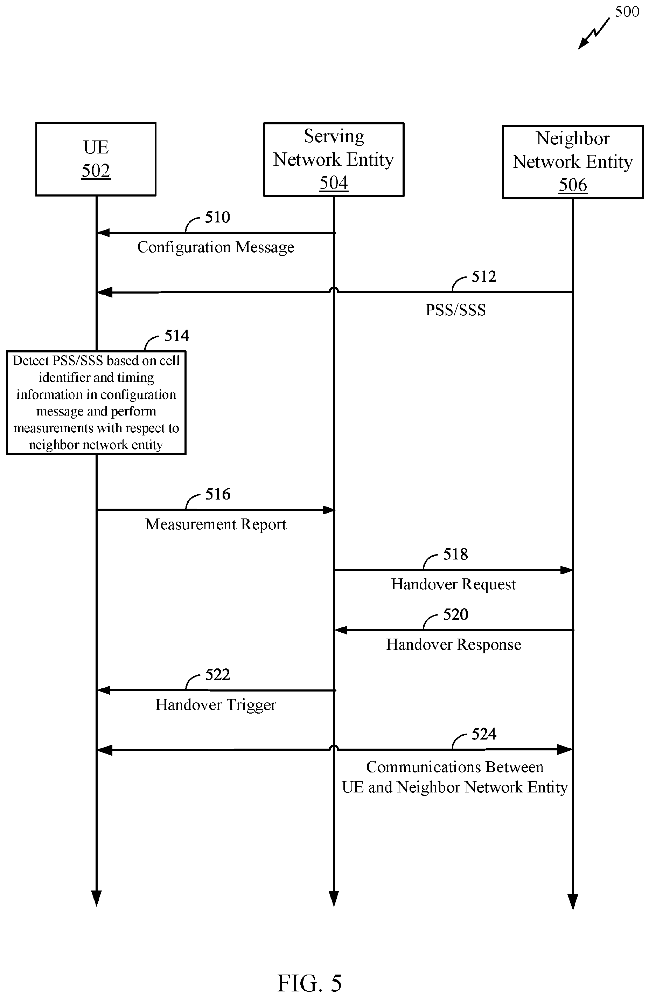

The memories 242 and 282 may store data and program codes for BS 110 and UE 120, respectively. A scheduler 244 may schedule UEs for data transmission on the downlink or uplink. In one example, memory 282 or memory 242 can be a non-transitory computer-readable medium comprising instructions (e.g., instructions that instruct a processor, e.g., controller/processor 680, controller/processor 640, or other processor) to perform any aspects of FIGs. 4 and/or 5. Additionally or alternatively, such instructions may be copied or installed onto memory 282 or memory 242 from a non-transitory computer-readable medium.

The controller/processor 280 or other processors and modules at the UE 120 may perform or direct the execution of processes for the techniques described herein. As shown in **FIG. 2****,** the controller/processor 280 of the UE 120 has a neighbor cell detection module 122 that may be configured to perform operations 400 of **FIG. 4****,** as discussed in further detail below. The controller/processor 240 of the base station 110 includes a neighbor cell configuration module 112 that may be configured to configure a UE (e.g., UE 120) with cell identifier and cell timing information that the UE can use to detect and hand over to neighbor cells, as discussed in further detail below. Although shown at the Controller/Processor, other components of the UE or BS may be used to perform the operations described herein.

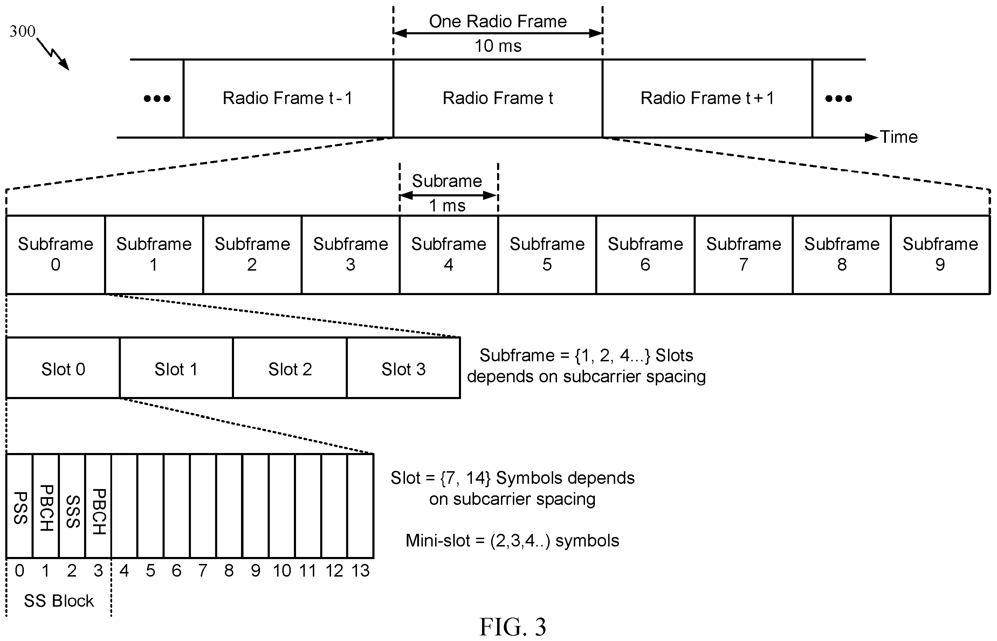

**FIG. 3** is a diagram showing an example of a frame format 300 for NR. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots depending on the subcarrier spacing. Each slot may include a variable number of symbol periods (e.g., 7 or 14 symbols) depending on the subcarrier spacing. The symbol periods in each slot may be assigned indices. A mini-slot, which may be referred to as a sub-slot structure, refers to a transmit time interval having a duration less than a slot (e.g., 2, 3, or 4 symbols).

Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

In NR, a synchronization signal (SS) block is transmitted. The SS block includes a PSS, a SSS, and a two symbol PBCH. The SS block can be transmitted in a fixed slot location, such as the symbols 0-3 as shown in **FIG. 3****.** The PSS and SSS may be used by UEs for cell search and acquisition. The PSS may provide half-frame timing, the SS may provide the CP length and frame timing. The PSS and SSS may provide the cell identity. The PBCH carries some basic system information, such as downlink system bandwidth, timing information within radio frame, SS burst set periodicity, system frame number, etc. The SS blocks may be organized into SS bursts to support beam sweeping. Further system information such as, remaining minimum system information (RMSI), system information blocks (SIBs), other system information (OSI) can be transmitted on a physical downlink shared channel (PDSCH) in certain subframes. The SS block can be transmitted up to sixty-four times, for example, with up to sixty-four different beam directions for mmW. The up to sixty-four transmissions of the SS block are referred to as the SS burst set. SS blocks in an SS burst set are transmitted in the same frequency region, while SS blocks in different SS bursts sets can be transmitted at different frequency locations.

A control resource set (CORESET) for systems, such as an NR and LTE systems, may comprise one or more control resource (e.g., time and frequency resources) sets, configured for conveying PDCCH, within the system bandwidth. Within each CORESET, one or more search spaces (e.g., common search space (CSS), UE-specific search space (USS), etc.) may be defined for a given UE. According to aspects of the present disclosure, a CORESET is a set of time and frequency domain resources, defined in units of resource element groups (REGs). Each REG may comprise a fixed number (e.g., twelve) tones in one symbol period (e.g., a symbol period of a slot), where one tone in one symbol period is referred to as a resource element (RE). A fixed number of REGs may be included in a control channel element (CCE). Sets of CCEs may be used to transmit new radio PDCCHs (NR-PDCCHs), with different numbers of CCEs in the sets used to transmit NR-PDCCHs using differing aggregation levels. Multiple sets of CCEs may be defined as search spaces for UEs, and thus a NodeB or other base station may transmit an NR-PDCCH to a UE by transmitting the NR-PDCCH in a set of CCEs that is defined as a decoding candidate within a search space for the UE, and the UE may receive the NR-PDCCH by searching in search spaces for the UE and decoding the NR-PDCCH transmitted by the NodeB.

### Example Methods for Discovering Neighbor Cells Using Cell Identifier and Cell Timing Information

Aspects of the present disclosure provide apparatus, methods, processing systems, and computer readable mediums for discovering neighbor cells using cell identifier and cell timing information.

Typically, to discover a potential neighbor cell, a UE may perform a blind search for neighboring cells. A blind search may entail searching for all possible combinations of a primary synchronization signal (PSS) and a secondary synchronization signal (SSS) to identify one of a plurality of physical cell identifiers. For example, each combination of a PSS and SSS may map to one of 504 physical cell identifiers (PCIs).

Generally, the PSS and SSS may be transmitted by a cell periodically. For example, the PSS and SSS may be transmitted every 5 milliseconds or with a periodicity of a half frame (HF). In a blind search, however, the UE may not know specific information about the timing at which the PSS and SSS are transmitted. That is, the UE may know that the PSS and SSS may be transmitted with a specific periodicity but may not have information about a reference point in time from which to attempt to detect the PSS and/or SSS. Thus, to detect a neighboring cell, the UE may attempt to detect a PSS and an SSS in each possible time instance to identify accurate timing information for the detected neighboring cell.

Additionally, the UE may have information about a center frequency on which a neighboring cell operates. To detect a neighboring cell, a UE may need at least 5 milliseconds of samples from each frequency layer. The UE may thus hypothesize the location of the PSS and SSS of the neighboring cell 9,600 times, assuming a sampling rate of 1.4 MHz to detect a neighbor cell having one of 504 different PCIs.

Further, UEs operating in coverage enhanced modes (e.g., for Machine Type Communication (MTC) or enhanced MTC (eMTC) UEs) may have limited communications resources (e.g., a single receive/transmit chain) and operate in low signal-to-noise ratio (SNR) environments. Because these UEs may have limited communications resources, these UEs may correlate received signals across multiple half frames to detect neighboring cells. This may further delay the identification of neighbor cells to which the UE can hand over.

Generally, the efficiency of neighbor cell detection and handover processes may be impacted by the number of timing and frequency hypotheses a UE makes in order to detect a neighboring cell. For example, detection probability generally increases as the UE makes more hypotheses; however, increased detection probability may be correlated with increased power consumption and longer timing delays in detecting and handing over to neighboring cells. Power consumption and timing delays in detecting and handing over to neighboring cells may be exasperated for UEs that have fewer communications resources (e.g., MTC/eMTC UEs operating in coverage enhanced modes), as these UEs may operate in environments where it is more difficult to detect and decode the PSS and SSS of a neighboring cell.

To accelerate the detection of neighboring cells, aspects described herein provide for the communication of neighbor cell identifier and cell timing information from a serving network entity to a UE. Using this cell identifier and cell timing information, a UE can attempt to identify neighboring cells with the cell identifiers provided by the serving network entity and attempt to hand over to one of the identified neighboring cells. Because the UE may have information about neighboring cell timing and cell identifiers, the UE may reduce the number of timing hypotheses needed to identify a neighboring cell. Neighbor cell detection may be improved, for example, in low SNR environments. Further, neighbor cell detection may be accelerated, which may accelerate handover procedures, improve throughput, and reduce power usage at a UE.

**FIG. 4** illustrates operations 400 that are performed by a user equipment (UE) to detect neighboring cells based on cell identifier and cell timing information received from a serving network entity.

As illustrated, operations 400 begin at block 402, where the UE receives, from a network entity, cell information for neighbor cells. As discussed in further detail herein, the cell information for neighbor cells generally includes information that the UE can use to accelerate the process of searching for and synchronizing with neighbor cells. For example, the cell information may include cell identifier information, timing synchronization information, and other information that the UE can use in identifying neighbor cells to which the UE can hand over.

At block 404, the UE searches for synchronization signals from the neighbor cells based on the cell information. The UE can search for synchronization signals using the cell identifier and timing information (and other cell information) provided by the network to the UE at block 402. For example, the UE can search for a PSS and SSS that maps to one of a plurality of cell identifiers (e.g., a cell identifier associated with a specific neighbor cell), and the UE can use timing information associated with the neighbor cell to adjust its clock such that the PSS and SSS mapping to the one of the plurality of cell identifiers associated with the neighbor cell is successfully received without needing to attempt to blindly search for the PSS and SSS.

At block 406, the UE identifies, based on the synchronization signals from the neighbor cells, one of the neighbor cells to perform a handover to. The UE can identify a neighbor cell to which the UE is to hand over based on cell measurements for each of the neighbor cells detected by the UE at block 402. Generally, the UE can select the neighbor cell to which the UE is to hand over as the neighbor cell having sufficient signal strength for communications with the UE. For example, the UE can select one of a plurality of neighbor cells having a measured signal strength exceeding a threshold. In another example, the UE can select the neighbor cell having a highest measured signal strength of the plurality of neighbor cells identified at block 404.

At block 408, the UE initiates a handover from a serving cell to the identified one of the neighbor cells.

In some embodiments, to initiate a handover from a serving cell to the identified one of the neighbor cells, the UE may transmit a measurement report to the serving cell. The measurement report may include measurements from the one or more detected neighbor cells, including the one of the neighbor cells identified by the UE as a neighbor cell to perform a handover to. The identified one of the neighbor cells may include, for example, the detected neighbor cell having a highest signal quality metric (e.g., received signal strength) measured by the UE. Subsequent to transmitting the measurement report, the UE may receive a handover trigger identifying the neighbor cell with which the UE is to communicate (e.g., the one of the neighbor cells identified based on the synchronization signals received from the detected neighbor cells), and the UE may attach and synchronize with the identified neighbor cell.

In some embodiments, the UE may receive cell information for neighbor cells from a serving network entity. The cell information may be received, for example, when a UE attaches to a serving network entity, on request, or periodically. For example, a UE may request the cell information when a signal quality metric falls below a threshold value. In some embodiments, the signal quality metric may be a metric measured over a time window such that a decrease in signal quality of a sufficient amount indicates that the UE may hand over from a serving network entity to another network entity at a future point in time.

The cell information includes a subset of neighboring cell identifiers on a plurality of frequency bands and time synchronization information for each of the neighbor cells. The neighboring cell identifiers are cell identifiers included in intra-frequency and/or inter-frequency neighboring cell lists (e.g., in intraFreqNeighCellList and/or interFreqNeighCellList). In some embodiments, the serving network entity may pass the inter-frequency and/or inter-frequency neighboring cell lists to a UE automatically if the network supports communications with coverage enhanced UEs (e.g., MTC/eMTC UEs).

The time synchronization information may be provided to a UE on a per-cell basis. In some embodiments, the time synchronization information may be time offset information, relative to the timing of the serving network entity. The time offset information may be expressed at varying levels of granularity, such as a symbol duration, a slot duration, a subframe duration, or the like. In some embodiments, the time synchronization information may be a synchronization flag or other binary indicator. The synchronization flag may be set to a first value (e.g., binary 1, Boolean TRUE, etc.) where cells in a network are synchronous and set to a second value (e.g., binary 0, Boolean FALSE, etc.) where cells in a network are not synchronous (e.g., maintain timing independently).

As discussed, by communicating neighbor cell timing information to a user equipment, the timing hypotheses needed for a UE to detect the PSS and SSS of a neighboring cell may be reduced. For example, the number of timing hypotheses may be reduced from hypotheses over a half frame (e.g., 9,600 timing hypotheses over a 5 millisecond time frame) to hypotheses over a number of symbols (e.g., 300 timing hypotheses over a duration of 1-2 symbols). Because a UE may need less time to detect a PSS and SSS of a neighboring cell, a UE may hand over to a neighboring cell faster, which may improve throughput (from reductions in failed transmissions and resulting retransmissions of data signals to a serving network entity over a weak connection), reduce power usage (from using a transmission power less than a maximum transmission power supported by a UE), and the like. Detection performance may further be improved when a list of cell identifiers is included, as a UE may have *a priori* knowledge of which cell IDs (and correspondingly, which PSSs and SSSs) to monitor for in detecting neighboring cells.

**FIG. 5** shows a call flow diagram of example messages that may be exchanged between a UE 502, a serving network entity 504, and a neighbor network entity 506 to configure a UE to detect neighbor cells based on information provided about neighbor cell identities and timing and initiate a handover to the neighbor cells, according to certain embodiments. As illustrated, a UE 502 may receive a configuration message 510 from a serving network entity 504 (e.g., a serving cell, serving gNB, etc.). Configuration message 510 generally includes information that may allow a UE to quickly identify neighboring cells. This information, as discussed, may include cell identity information (e.g., a physical cell identifier (PCI)) for each of a plurality of neighboring cells and cell timing information used by each of the plurality of neighboring cells to transmit synchronization signals (e.g., PSS and SSS).

Subsequent to being configured with information about the neighboring cells via configuration message 510, UE 502 can determine that a handover may be warranted (e.g., based on a signal strength metric measured for a connection between the UE 502 and the serving UE 504, retransmission metrics, etc.) and, at block 514, monitors for a PSS and SSS 512 transmitted by a neighboring network entity 506. The UE may monitor for the PSS/SSS 512 using the information received via configuration message 510. For example, the UE may monitor for PSS/SSS 512 that is associated with one of the cell identifiers (e.g., PCIs) included in the configuration information based on the timing information included in the configuration message 510. The timing information may indicate, for example, a timing offset for detecting PSS/SSS from neighboring cells relative to PSS/SSS timing for a serving cell, an absolute timing for detecting PSS/SSS from neighboring cells (e.g., based on a common timing mechanism, such as timing from one or more satellite positioning systems, such as NAVSTAR GPS, GALILEO, GLONASS, or the like).

After detecting one or more neighboring cells and performing measurements with respect to the detected one or more neighboring cells at block 514, the UE 502 may generate a measurement report 516 including measurements of signals detected from the one or more neighboring cells. The one or more neighboring cells may include, for example, a subset of neighboring cells identified in the configuration information having a highest received signal strength or other signal quality metric. In some embodiments, the measurement report may include measurements for one or more detected neighboring cells having a signal strength or signal quality metric over a threshold value. The UE may transmit the measurement report 516 to a serving network entity 504 to initiate a handover from the serving network entity 504 to the neighbor network entity 506.

The serving network entity 504, after receiving measurement report 516 from UE 502, may determine that a handover is warranted to a neighbor cell identified in the measurement report (e.g., to neighbor network entity 506). Based on determining that a handover is warranted, the serving network entity 504 may transmit a handover request 518 to the neighbor network entity 506 and, in response, receive a handover response 520 indicating that the neighbor cell is ready to communicate with the UE 502. The serving network entity 504 may transmit a handover trigger 522 to UE 502 to indicate that the UE is to synchronize and begin communications with the neighbor network entity 506. After synchronization, the UE 502 and the neighbor network entity 506 may perform communications 524 of uplink and/or downlink data between the UE 502 and the neighbor network entity 506.

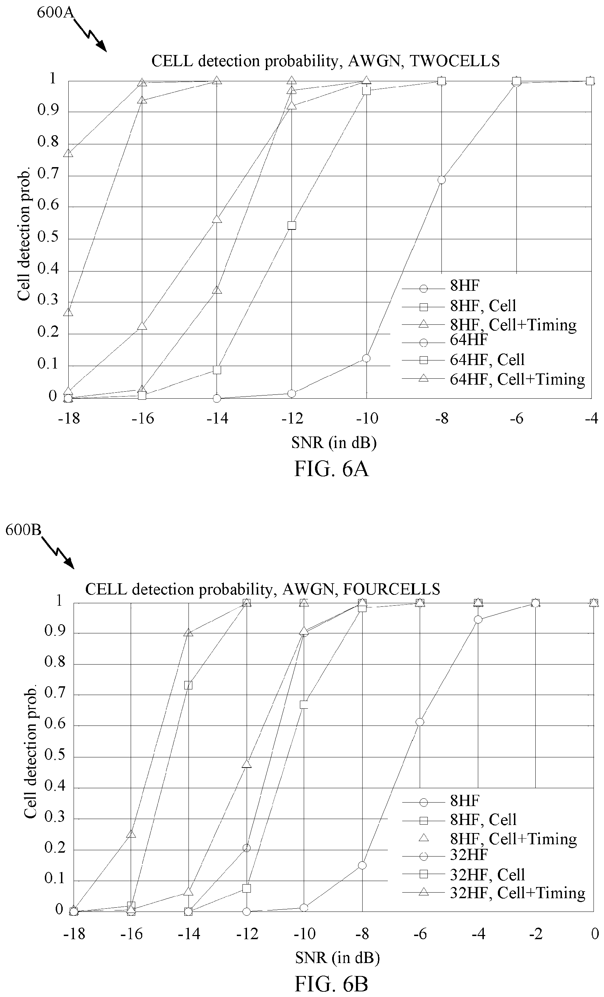

**FIGs. 6A** and **6B** illustrate detection probability of neighboring cells based on blind detection, a list of neighboring cell identifiers, and a list of neighboring cell identifiers and timing information.

In **FIG. 6A****,** a serving network entity to which a UE is connected may have two neighboring cells. As illustrated in detection probability graph 600A, over eight half frames (HFs) with a HF duration of 0.5 milliseconds, covering a 4 millisecond duration, a UE may have a probability of detecting the two neighboring cells of less than 0.1 (i.e., a less than 10% chance of detecting the two neighboring cells) below a signal-to-noise ratio (SNR) of -10dB. At an SNR of -10dB, the UE has a probability of over 0.1 of detecting both neighboring cells. At an SNR of -8dB, the probability of detecting both neighboring cells increases to just under 0.7, and probability of detecting both neighboring cells reaches 0.9 at an SNR of -7.3dB.

As illustrated, the probability of detecting the two neighbor cells over eight HFs when a UE is configured with information about neighboring cell IDs is less than 0.1 at SNRs of -14dB or less. At an SNR of -12dB, the UE as a probability of detecting both neighboring cell IDs is over 0.5, which is significantly higher than the probability of discovering both neighboring cell IDs using blind detection. For an SNR of -10.8dB or greater, the probability of detecting both neighboring cells exceeds 0.9.

Further improvements in the probability of detecting the two neighbor cells over eight HFs may be increased if a UE receives information about the cell identifiers and timing information of the neighboring cells. As illustrated, at an SNR of -16dB, the probability of detecting both neighbor cells is over 0.2, as opposed to the almost 0 probability of detecting both neighbor cells using blind detection or when a UE is aware of neighbor cell identifiers. At an SNR of -14dB, the probability of detecting both neighboring cells increases to over 0.5, and at an SNR of -12.6dB, the probability of detecting both neighboring cells increases to 0.9. Thus, by communicating neighboring cell identifier and timing information to a UE, the UE has a probability of detecting both neighboring cells over 0.9 at an SNR that is 5dB weaker than the SNR at which the UE has a probability of detecting both neighboring cells of 0.9 using blind detection. Thus, in this example, a UE may experience a gain of about 2.5dB when the UE is configured with neighbor cell identifier information, and the UE may experience a gain of about 5dB when the UE is configured with both neighbor cell identifier information and neighbor cell timing information.

Improvements in the probability of detecting both neighboring cells over 64 HFs may also be seen in FIG. 6A. As illustrated, using blind detection, the probability of detecting both neighboring cells using blind detection is over 0.9 at an SNR of about - 12.5dB. In contrast, where a UE is configured with neighbor cell identifier information or neighbor cell identifier information and neighbor cell timing information is over 0.9 at an SNR of under -16dB. For example, where a UE is configured with neighbor cell identifier information, the probability of detecting both neighbor cells reaches 0.9 at an SNR of -16.4dB, and where a UE is configured with both a list of neighbor cell identifiers and neighbor cell timing information, the probability of detecting both neighbor cells reaches 0.9 at an SNR of -17.7dB. Thus, in this example, by configuring a UE with neighbor cell identifier information, a gain of almost 4dB may be experienced, and by configuring a UE with neighbor cell identifier information and neighbor cell timing information, a gain of almost 5dB may be experienced.

**FIG. 6B** illustrates a situation in which a UE has four neighboring cells to detect. As illustrated in detection probability graph 600B, over a period of 8 HFs, a UE using blind detection may have a probability of less than 0.1 of detecting all four neighboring cells up to an SNR of roughly -9dB. A probability of 0.9 of detecting all four neighboring cells using blind detection over a period of 8HFs is reached at an SNR of - 4.8dB.

In contrast, if a UE is configured with information about the cell identifiers of the four neighboring cells, over a period of 8 HFs, the UE has a probability of detecting all four neighboring cells of less than 0.1 up to an SNR of roughly -12dB. The probability of detecting all four neighboring cells reaches 0.9 at an SNR of -9.2dB. If a UE is configured with information about both the cell identifiers of the four neighboring cells and cell timing information for the four neighboring cells, the UE has a probability of detecting all four neighboring cells of less than 0.1 up to an SNR of roughly -14dB. The probability of detecting all four neighboring cells when a UE is configured with information about both the cell identifiers of the four neighboring cells and cell timing information for the four neighboring cells reaches 0.9 at an SNR of -10.5dB. Thus, in this example, a UE may experience a gain of about 4.4dB when a UE is configured with neighbor cell identifier information and a gain of about 5.3dB when a UE is configured with neighbor cell identifier information and neighbor cell timing information.

Improvements in the SNR needed to detect all four neighboring cells may also be seen in detection over a period of 32 HFs (e.g., over 16 milliseconds for a 0.5 millisecond HF duration). As illustrated, using blind detection, the probability of a UE detecting all four neighboring cells is less than 0.1 up to an SNR of roughly -13dB. The probability of the UE detecting all four neighboring cells using blind detection reaches 0.9 at an SNR of -10.3dB. When a UE is configured with cell identifier information, over a period of 32 HFs, the probability of detecting all four neighboring cells is less than 0.1 up to an SNR of roughly -16dB. The probably of detecting all four neighboring cells reaches 0.9 at an SNR of -13.5dB. Finally, when a UE is configured with cell identifier information and cell timing information, the probability of the UE detecting all four neighboring cells is less than 0.1 up to an SNR of roughly -17dB. The probability of detecting all four neighboring cells when a UE is configured with cell identifier information and cell timing information reaches 0.9 at an SNR of -14.3dB. Thus, cell detection over four neighboring cells may experience a gain of about 3dB when a UE is configured with cell identifier information and a gain of about 4dB when a UE is configured with cell identifier information and cell timing information.

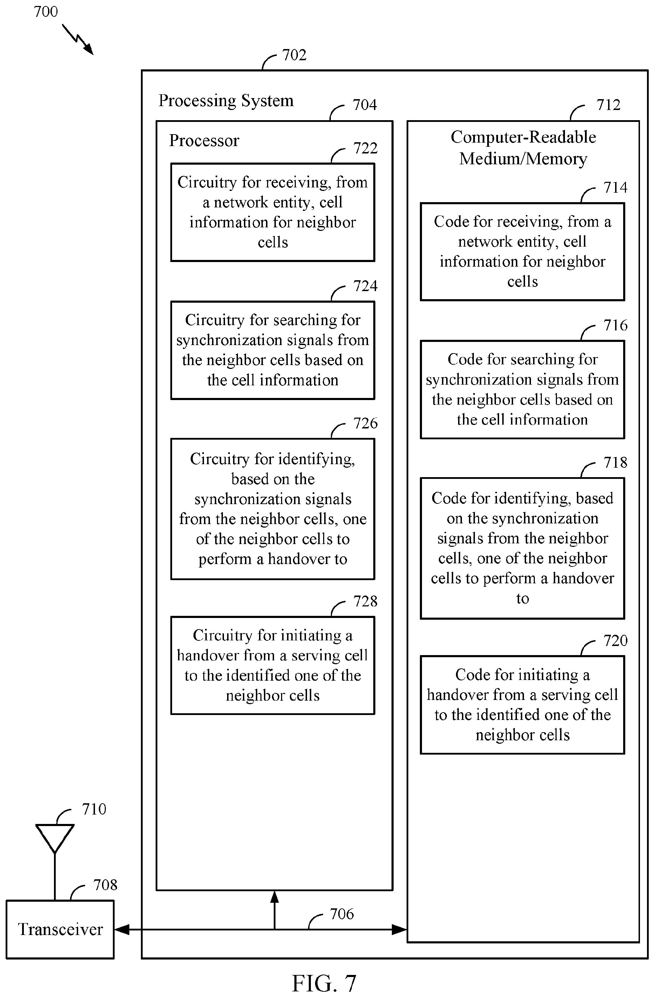

**FIG. 7** illustrates a communications device 700 that may include various components (e.g., corresponding to means-plus-function components) configured to perform operations for the techniques disclosed herein, such as the operations illustrated in **FIG. 4****.** The communications device 700 includes a processing system 702 coupled to a transceiver 708. The transceiver 708 is configured to transmit and receive signals for the communications device 700 via an antenna 710, such as the various signals as described herein. The processing system 702 may be configured to perform processing functions for the communications device 700, including processing signals received and/or to be transmitted by the communications device 700.

The processing system 702 includes a processor 704 coupled to a computer-readable medium/memory 77 via a bus 706. In certain aspects, the computer-readable medium/memory 77 is configured to store instructions (e.g., computer-executable code) that when executed by the processor 704, cause the processor 704 to perform the operations illustrated in FIG. 10, or other operations for recovering a sidelink communication that is missed by a wireless node due to the wireless node transmitting while the sidelink communication is occurring. In certain aspects, computer-readable medium/memory 712 stores code 714 for receiving, from a network entity, cell information for neighbor cells; code 716 for searching for synchronization signals from the neighbor cells based on the cell information; code 718 for identifying, based on the synchronization signals from the neighbor cells, one of the neighbor cells to perform a handover to; and code 720 for initiating a handover from a serving cell to the identified one of the neighbor cells. In certain aspects, the processor 704 has circuitry configured to implement the code stored in the computer-readable medium/memory 712. The processor 704 includes circuitry 722 for receiving, from a network entity, cell information for neighbor cells; circuitry 724 for searching for synchronization signals from the neighbor cells based on the cell information; circuitry 726 for identifying, based on the synchronization signals, from the neighbor cells, one of the neighbor cells to perform a handover to; and circuitry 728 for initiating a handover from a serving cell to the identified one of the neighbor cells.

### Example Clauses

Clause 1: A method for wireless communications by a user equipment, comprising: receiving, from a network entity, cell information for neighbor cells; searching for synchronization symbols from the neighbor cells based on the cell information; based on the synchronization symbols from the neighbor cells, identifying one of the neighbor cells to perform a handover to; and initiating a handover from a serving cell to the identified one of the neighbor cells.

Clause 2: The method of Clause 1, wherein the cell information comprises a list of cell identifiers for a subset of neighbor cells operating in intra or inter frequency bands relative to a frequency band on which the serving cell is operating.

Clause 3: The method of any one of Clauses 1 or 2, wherein the cell information comprises time synchronization information for each of the neighbor cells.

Clause 4: The method of Clause 3, wherein the time synchronization information comprises time offset information measured in a number of slots.

Clause 5: The method of Clause 3, wherein the time synchronization information comprises time offset information measured in a number of subframes.

Clause 6: The method of Clause 3, wherein the time synchronization information comprises a flag indicating that the neighbor cells are synchronized.

Clause 7: The method of any one of Clauses 1 through 6, wherein the cell information for the neighbor cells is received from a network entity supporting communications with the UE using enhanced coverage.

Clause 8: A system, comprising: a memory having executable instructions stored thereon; and a processor configured to execute the executable instructions to cause the system to perform the operations of any one of Clauses 1 through 7.

Clause 9: A system, comprising: means for performing the operations of any one of Clauses 1 through 7.

Clause 10: A computer-readable medium having instructions stored thereon which, when executed by a processor, performs the operations of any one of Clauses 1 through 7.

### Additional Considerations

The techniques described herein may be used for various wireless communication technologies, such as NR (for example, 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

The techniques described herein may be used for the wireless networks and radio technologies mentioned above as well as other wireless networks and radio technologies. For clarity, while aspects may be described herein using terminology commonly associated with 3G, 4G, or 5G wireless technologies, aspects of the present disclosure can be applied in other generation-based communication systems.

In 3GPP, the term "cell" can refer to a coverage area of a Node B (NB) or a NB subsystem serving this coverage area, depending on the context in which the term is used. In NR systems, the term "cell" and BS, next generation NodeB (gNB or gNodeB), access point (AP), distributed unit (DU), carrier, or transmission reception point (TRP) may be used interchangeably. A BS may provide communication coverage for a macro cell, a pico cell, a femto cell, or other types of cells. A macro cell may cover a relatively large geographic area (for example, several kilometers in radius) and may allow unrestricted access by UEs with service subscription. A pico cell may cover a relatively small geographic area and may allow unrestricted access by UEs with service subscription. A femto cell may cover a relatively small geographic area (for example, a home) and may allow restricted access by UEs having an association with the femto cell (for example, UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS.

As discussed, by configuring a UE with neighboring cell identifier information and/or neighboring cell timing information, detection performance for neighboring cells may be improved. A smaller number of timing and/or frequency hypotheses may be needed to detect neighboring cells. Further, the probability of false alarms (e.g., false detections of neighboring cells) may be reduced.

Configuring a UE with neighboring cell identifier information and/or neighboring cell timing information may reduce an amount of delay imposed in handing over from a serving cell to a neighboring cell, as a UE may take less time to identify neighboring cells that are potential handover candidates. A shorter time period (e.g., fewer HFs) may be needed for a UE to detect neighboring cells when a UE is configured with neighboring cell identifier information and/or neighboring cell timing information relative to an amount of time needed for a UE to blindly detect neighboring cells. In high SNR environments, a UE configured with neighboring cell identifier information and/or neighboring cell timing information may detect neighboring cells in a shorter amount of time (e.g., 0.5 milliseconds) than would be needed to detect neighboring cells using blind detection. In connected mode and using blind detection, a single 6 millisecond gap may be dedicated for a single layer for collecting PSS/SSS samples; however, when a UE is configured with neighboring cell identifier and/or neighboring cell timing information, a single timing gap may be used to detect neighboring cells on multiple frequency layers utilizing the timing information and timing offsets between different frequency layers.

Configuring a UE with neighboring cell identifier information and/or neighboring cell timing information may also reduce an amount of power used by a UE. in idle mode, search and measurement of neighbor cells may occur after power-on, and PSS/SSS sample capturing and post-processing may affect the amount of time that a UE can be in a sleep or low power mode. For example, a UE may be awake for at least 5 milliseconds plus an additional amount of time needed to process detected PSSs/SSSs, and for enhanced coverage UEs (e.g., MTC/eMTC UEs), additional time may be needed to detect neighboring cells due to low SNR of received signals from the neighboring cells. When a UE is configured with neighboring cell identifier information and/or neighboring cell timing information, searching for neighboring cells may be a less time intensive process (e.g., taking 0.5 milliseconds plus a processing overhead time to detect neighboring cells), as a UE may not need to sample as many time/frequency combinations to detect PSSs/SSSs and process the received signals. Improvements may be increased in low SNR environments and for enhanced coverage UEs, where a UE may not need to monitor as many HFs for PSSs/SSSs from neighboring cells.

A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (for example, a smart ring, a smart bracelet, etc.), an entertainment device (for example, a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (for example, remote device), or some other entity. A wireless node may provide, for example, connectivity for or to a network (for example, a wide area network such as Internet or a cellular network) via a wired or wireless communication link. Some UEs may be considered Internet-of-Things (IoT) devices, which may be narrowband IoT (NB-IoT) devices.

Some wireless networks (for example, LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block" (RB)) may be 12 subcarriers (or 180 kHz). Consequently, the nominal Fast Fourier Transfer (FFT) size may be equal to 128, 256, 512, 1024 or 2048 for system bandwidth of 1.25, 2.5, 5, 10, or 20 megahertz (MHz), respectively. The system bandwidth may also be partitioned into subbands. For example, a subband may cover 1.08 MHz (for example, 6 RBs), and there may be 1, 2, 4, 8, or 16 subbands for system bandwidth of 1.25, 2.5, 5, 10 or 20 MHz, respectively. In LTE, the basic transmission time interval (TTI) or packet duration is the 1 ms subframe.

NR may utilize OFDM with a CP on the uplink and downlink and include support for half-duplex operation using time division duplexing (TDD). In NR, a subframe is still 1 ms, but the basic TTI is referred to as a slot. A subframe contains a variable number of slots (for example, 1, 2, 4, 8, 16, ... slots) depending on the subcarrier spacing. The NR RB is 12 consecutive frequency subcarriers. NR may support a base subcarrier spacing of 15 KHz and other subcarrier spacing may be defined with respect to the base subcarrier spacing, for example, 30 kHz, 60 kHz, 120 kHz, 240 kHz, etc. The symbol and slot lengths scale with the subcarrier spacing. The CP length also depends on the subcarrier spacing. Beamforming may be supported and beam direction may be dynamically configured. MIMO transmissions with precoding may also be supported. In some examples, MIMO configurations in the DL may support up to 8 transmit antennas with multi-layer DL transmissions up to 8 streams and up to 2 streams per UE. In some examples, multi-layer transmissions with up to 2 streams per UE may be supported. Aggregation of multiple cells may be supported with up to 8 serving cells.

In some examples, access to the air interface may be scheduled. A scheduling entity (for example, a BS) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (for example, one or more other UEs), and the other UEs may utilize the resources scheduled by the UE for wireless communication. In some examples, a UE may function as a scheduling entity in a peer-to-peer (P2P) network, or in a mesh network. In a mesh network example, UEs may communicate directly with one another in addition to communicating with a scheduling entity.

As used herein, the term "determining" may encompass one or more of a wide variety of actions. For example, "determining" may include calculating, computing, processing, deriving, investigating, looking up (for example, looking up in a table, a database or another data structure), assuming and the like. Also, "determining" may include receiving (for example, receiving information), accessing (for example, accessing data in a memory) and the like. Also, "determining" may include resolving, selecting, choosing, establishing and the like.

As used herein, "or" is used intended to be interpreted in the inclusive sense, unless otherwise explicitly indicated. For example, "a or b" may include a only, b only, or a combination of a and b. As used herein, a phrase referring to "at least one of" or "one or more of" a list of items refers to any combination of those items, including single members. For example, "at least one of: a, b, or c" is intended to cover the possibilities of: a only, b only, c only, a combination of a and b, a combination of a and c, a combination of b and c, and a combination of a and b and c.

The various illustrative components, logic, logical blocks, modules, circuits, operations and algorithm processes described in connection with the implementations disclosed herein may be implemented as electronic hardware, firmware, software, or combinations of hardware, firmware or software, including the structures disclosed in this specification and the structural equivalents thereof. The interchangeability of hardware, firmware and software has been described generally, in terms of functionality, and illustrated in the various illustrative components, blocks, modules, circuits and processes described above. Whether such functionality is implemented in hardware, firmware or software depends upon the particular application and design constraints imposed on the overall system.

Various modifications to the implementations described in this disclosure may be readily apparent to persons having ordinary skill in the art, and the generic principles defined herein may be applied to other implementations without departing from the scope of this disclosure. Thus, the claims are not intended to be limited to the implementations shown herein, but are to be accorded the widest scope consistent with this disclosure, the principles and the novel features disclosed herein.

Additionally, various features that are described in this specification in the context of separate implementations also can be implemented in combination in a single implementation. Conversely, various features that are described in the context of a single implementation also can be implemented in multiple implementations separately or in any suitable subcombination. As such, although features may be described above as acting in particular combinations, and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one or more example processes in the form of a flowchart or flow diagram. However, other operations that are not depicted can be incorporated in the example processes that are schematically illustrated. For example, one or more additional operations can be performed before, after, simultaneously, or between any of the illustrated operations. In some circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

## Claims

1. A method for wireless communications performed by a user equipment (502), comprising:
receiving (402), from a network entity, cell information for neighbor cells (506), wherein the cell information comprises a list of cell identifiers for a subset of neighbor cells (506) operating in intra or inter frequency bands relative to a frequency band on which a serving cell (504) is operating and time synchronization information for the neighbor cells (506);
searching (404) for synchronization symbols from the neighbor cells (506) based on the cell information;
based on the synchronization symbols from the neighbor cells (506), identifying (406) one of the neighbor cells (506) to perform a handover to; and
initiating (408) a handover from the serving cell (504) to the identified one of the neighbor cells (506).

2. The method of claim 1, wherein the time synchronization information comprises time offset information measured in a number of slots.

3. The method of claim 1, wherein the time synchronization information comprises time offset information measured in a number of subframes.

4. The method of claim 1, wherein the time synchronization information comprises a flag indicating that the neighbor cells (506) are synchronized.

5. The method of claim 1, wherein the cell information for the neighbor cells (506) is received from a network entity supporting communications with the UE (502) using enhanced coverage.

6. A user equipment (502), comprising:
means for receiving, from a network entity, cell information for neighbor cells (506), wherein the cell information comprises a list of cell identifiers for a subset of neighbor cells (506) operating in intra or inter frequency bands relative to a frequency band on which a serving cell (504) is operating and time synchronization information for the subset of neighbor cells (506);
means for searching for synchronization symbols from the neighbor cells (506) based on the cell information;
means for based on the synchronization symbols from the neighbor cells (506), identifying one of the neighbor cells (506) to perform a handover to; and
means for initiating a handover from the serving cell (504) to the identified one of the neighbor cells (506).

7. The user equipment of claim 6, wherein the time synchronization information comprises time offset information measured in a number of slots.

8. The user equipment of claim 6, wherein the time synchronization information comprises time offset information measured in a number of subframes.

9. The user equipment of claim 6, wherein the time synchronization information comprises a flag indicating that the neighbor cells (506) are synchronized.

10. The user equipment of claim 6, wherein the cell information for the neighbor cells (506) is received from a network entity supporting communications with the UE using enhanced coverage.

11. A computer-readable medium having instructions stored thereon which, when executed by a processor, causes the processor to perform a method according to any of claims 1 to 5.

## Patentansprüche

1. Ein Verfahren für drahtlose Kommunikationen, durchgeführt von einem Benutzergerät (502) durchgeführt, aufweisend:
Empfangen (402), von einer Netzwerkentität, von Zellinformation für Nachbarzellen (506), wobei die Zellinformation aufweist eine Liste von Zellidentifikatoren für einen Teilsatz von Nachbarzellen (506), die arbeiten in Intra- oder Inter-Frequenzbändern relativ zu einem Frequenzband, auf dem eine bedienende Zelle (504) arbeitet, und Zeitsynchronisationsinformation für die Nachbarzellen (506);
Suchen (404) nach Synchronisationssymbolen von den Nachbarzellen (506) basierend auf der Zellinformation;
basierend auf den Synchronisationssymbolen von den Nachbarzellen (506), Identifizieren (406) einer der Nachbarzellen (506), um eine Übergabe durchzuführen; und
Initiieren (408) einer Übergabe von der bedienenden Zelle (504) zu der identifizierten Einen der Nachbarzellen (506).

2. Das Verfahren nach Anspruch 1, wobei die Zeitsynchronisationsinformation aufweist Zeitversatzinformation gemessen in einer Anzahl von Schlitzen.

3. Das Verfahren nach Anspruch 1, wobei die Zeitsynchronisationsinformation aufweist Zeitversatzinformation gemessen in einer Anzahl von Unterrahmen.

4. Das Verfahren nach Anspruch 1, wobei die Zeitsynchronisationsinformation aufweist ein Flag anzeigend, dass die Nachbarzellen (506) synchronisiert sind.

5. Das Verfahren nach Anspruch 1, wobei die Zellinformation für die Nachbarzellen (506) empfangen wird von einer Netzwerkentität die Kommunikationen unterstützt mit dem UE (502) unter Verwendung von erweiterter Abdeckung.

6. Ein Benutzergerät (502), aufweisend:
Mittel zum Empfangen, von einer Netzwerkentität, von Zellinformation für Nachbarzellen (506), wobei die Zellinformation aufweist eine Liste von Zellidentifikatoren für einen Teilsatz von Nachbarzellen (506), die arbeiten in Intra- oder Inter-Frequenzbändern relativ zu einem Frequenzband, auf dem eine bedienende Zelle (504) arbeitet, und Zeitsynchronisationsinformation für den Teilsatz von Nachbarzellen (506);
Mittel zum Suchen nach Synchronisationssymbolen von den Nachbarzellen (506) basierend auf der Zellinformation;
Mittel zum Identifizieren, basierend auf den Synchronisationssymbolen von den Nachbarzellen (506), einer der Nachbarzellen (506), um eine Übergabe durchzuführen; und
Mittel zum Initiieren einer Übergabe von der bedienenden Zelle (504) zu der identifizierten Einen der Nachbarzellen (506).

7. Das Benutzergerät nach Anspruch 6, wobei die Zeitsynchronisationsinformation aufweist Zeitversatzinformation gemessen in einer Anzahl von Schlitzen.

8. Das Benutzergerät nach Anspruch 6, wobei die Zeitsynchronisationsinformation aufweist Zeitversatzinformation gemessen in einer Anzahl von Unterrahmen.

9. Das Benutzergerät nach Anspruch 6, wobei die Zeitsynchronisationsinformation aufweist ein Flag anzeigend, dass die Nachbarzellen (506) synchronisiert sind.

10. Das Benutzergerät nach Anspruch 6, wobei die Zellinformation für die Nachbarzellen (506) empfangen wird von einer Netzwerkentität die Kommunikationen unterstützt mit dem UE unter Verwendung von erweiterter Abdeckung.

11. Ein computerlesbares Medium mit darauf gespeicherten Anweisungen, die, wenn sie von einem Prozessor ausgeführt werden, den Prozessor veranlassen, ein Verfahren nach einem der Ansprüche 1 bis 5 durchzuführen.

## Revendications

1. Un procédé de communications sans fil réalisé par un équipement utilisateur (502), comprenant :
la réception (402), à partir d'une entité de réseau, d'informations de cellule pour des cellules voisines (506),
dans lequel les informations de cellule comprennent une liste d'identifiants de cellule pour un sous-ensemble de cellules voisines (506) fonctionnant dans des bandes intra ou interfréquence par rapport à une bande de fréquences sur laquelle une cellule de desserte (504) fonctionne, et des informations de synchronisation temporelle pour les cellules voisines (506) ;
la recherche (404) de symboles de synchronisation à partir des cellules voisines (506) sur la base des informations de cellule ;
l'identification (406), sur la base des symboles de synchronisation des cellules voisines (506), d'une des cellules voisines (506) vers laquelle réaliser un transfert ; et
l'initiation (408) d'un transfert de la cellule de desserte (504) vers l'une identifiée parmi les cellules voisines (506).

2. Le procédé selon la revendication 1, dans lequel les informations de synchronisation temporelle comprennent des informations de décalage temporel mesurées dans un certain nombre de créneaux.

3. Le procédé selon la revendication 1, dans lequel les informations de synchronisation temporelle comprennent des informations de décalage temporel mesurées dans un certain nombre de sous-trames.

4. Le procédé selon la revendication 1, dans lequel les informations de synchronisation temporelle comprennent un drapeau indiquant que les cellules voisines (506) sont synchronisées.

5. Le procédé selon la revendication 1, dans lequel les informations de cellule pour les cellules voisines (506) sont reçues à partir d'une entité de réseau supportant des communications avec l'UE (502) utilisant une couverture améliorée.

6. Un équipement utilisateur (502), comprenant :
des moyens de réception, à partir d'une entité de réseau, d'informations de cellule pour des cellules voisines (506), dans lequel les informations de cellule comprennent une liste d'identifiants de cellule pour un sous-ensemble de cellules voisines (506) fonctionnant dans des bandes intra ou interfréquence par rapport à une bande de fréquences sur laquelle une cellule de desserte (504) fonctionne, et des informations de synchronisation temporelle pour le sous-ensemble de cellules voisines (506) ;
des moyens de recherche de symboles de synchronisation à partir des cellules voisines (506) sur la base des informations de cellule ;
des moyens d'identification, sur la base des symboles de synchronisation des cellules voisines (506), d'une des cellules voisines (506) vers laquelle effectuer un transfert ; et
des moyens d'initiation d'un transfert de la cellule de desserte (504) vers l'une identifiée parmi les cellules voisines (506).

7. L'équipement utilisateur selon la revendication 6, dans lequel les informations de synchronisation temporelle comprennent des informations de décalage temporel mesurées dans un certain nombre de créneaux.

8. L'équipement utilisateur selon la revendication 6, dans lequel les informations de synchronisation temporelle comprennent des informations de décalage temporel mesurées dans un certain nombre de sous-trames.

9. L'équipement utilisateur selon la revendication 6, dans lequel les informations de synchronisation temporelle comprennent un drapeau indiquant que les cellules voisines (506) sont synchronisées.

10. L'équipement utilisateur selon la revendication 6, dans lequel les informations de cellule pour les cellules voisines (506) sont reçues à partir d'une entité de réseau supportant des communications avec l'UE utilisant une couverture améliorée.

11. Un support lisible par calculateur comportant des instructions stockées sur celui-ci qui, lorsqu'elles sont exécutées par un processeur, amènent le processeur à réaliser un procédé selon l'une des revendications 1 à 5.
